# EUROPEAN PATENT APPLICATION

(11) **EP 0 531 592 A1**
(43) Date of publication of application: **17.03.1993**
(21) Application number: 91308386.1
(22) Date of filing: 13.09.1991
(51) Int. Cl.: B01D 46/26, B05B 15/12, B01D 46/44

(54) **Filtering particulate material from air or other gas**

(71) Applicant: INTECH EXPORTS PVT LIMITED, Pune 411 038, Maharashtra State (IN)
(72) Inventor: Ghaisas, Yashwant Gopal, Anand Tarang, Pune - 411 038, Maharashtra State (IN)
(74) Representative: Gallafent, Richard John

(57) **Abstract**

A filter device for removing fine powders from a stream of air or other gas uses a motor-driven suction pump (22) to drive a rotary high-speed filter (32) intended to use centrifugal force to throw off the solid material trapped by the filter. The filter may be connected permanently to the rotor (42) of the suction pump (22), which may be of the centrifugal type, or it may be connected through a servo-controlled clutch responsive to the sub-atmospheric pressure in the interior of the filter body, which pressure drops as the filter becomes clogged. In one embodiment, the filter device extracts powder-laden air from a powder/spray-coating booth (8). The trapped and ejected powder is collected in the bottom of a powder-recovery chamber (8) having the filter device at its upper end. The powder accumulated by gravity is extracted periodically for re-use.

## Description

This invention relates to a device for separating solid particles from a gas stream in which they are entrained, and is particularly useful for improving the recovery of powders from the gases exhausted from powder spray-coating rooms or booths.

In such booths, sprayed powder which has not been deposited on the articles being coated, or on surfaces of the booth itself, floats in the air within the booth and needs to be removed from the air extracted from the booth before the air itself may be vented to the atmosphere. When the powder is in the form of a pigment to be used to colour the article being coated, the air-cleaning apparatus of the present invention helps in achieving easy and quick changes between applying powders of different colours. The apparatus of the present invention is compact and has few parts which need to be replaced because of wear; consumes relatively-little energy, and has low noise levels. The powder separation and recovery apparatus of the present invention could form an integral part of a powder-coating booth, or could be provided as an independent unit for treating any stream of air or other gas bearing particulate contaminants in the form of dust or fine powders.

Other forms of air-cleaning apparatus for powder spray-coating booths are known. Such powder-recovery apparatus is principally of (i) the cyclone separator type, (ii) the filter type or (iii) a combination thereof.

In the first type, the air and powder mixture is sucked from a spray-coating booth to a cyclone separator through a duct. Powder is separated from the airstream by centrifugal action in the separator, and is collected at the bottom of the separator housing under gravity. The cleaned air is exhausted to the atmosphere after the centrifugal separation step. Normally cyclone recovery efficiency varies between 90 and 96%, depending on the fineness of the powder. Powder particles sized above 30 µm have good collection efficiency, but below 30 µm collection of such "fines" is poor. The system, however, is convenient and efficient for cleaning between colour changes. Cyclone separators require large amounts of energy, and they are comparatively inefficient at collecting power "fines" or dust.

In filter type air/powder separators, the air and powder mixture is passed through textile or paper filters. Such filters, depending on the sizes of their interstitial spaces, allow only air to pass through them, while arresting particles of powder or other solids on their surface or in the body of the filter medium itself. Depending upon the selection of the filter medium, and the nature of the powder to be removed, the filtration efficiency can be almost 99%. However, such filters get choked quickly when filtering fine powders and require elaborate and time-consuming periodical cleaning. For colour changes, the entire filtration medium needs replacement. Such powder filtration systems are bulky; consume a lot of energy, and require cumbersome periodical cleaning. Moreover, the filter media have comparatively short lives, being worn away by the mechanical or other processes used for removing the material retained on the filter.

Various powder-recovery apparatuses have been developed using centrifugal separation and filtration. The filtration media have been designed to reduce or remove the above disadvantages. The ultimate objective is to recover most of the unused powder for reuse, and to exhaust less than 4 mg of powder per cubic metre of air (in order to comply with pollution control laws).

The present invention aims at accomplishing high solid separation and high recovery of powder, up to about 99.5%, while keeping the power and energy requirements low and the apparatus compact and simple to use compared with existing apparatus.

Accordingly the present invention provides a filter device as claimed in the appended claims.

The present invention will now be described by way of example with reference to the accompanying drawings, in which salient features have been shown in detail and referred to in the following description, and wherein:
- Figure 1: shows a schematic sectional side elevation of a spray-coating booth connected to the filter device of the present invention;
- Figure 2: shows a front view of the apparatus shown in Figure 1;
- Figure 3: shows a plan view of the apparatus shown in Figures 1 and 2, and
- Figure 4: shows in more detail a side elevation of the rotary filter of the present invention.

In the drawings, the filter device of the present invention is shown as being used in association with powder/spray-coating apparatus. The latter apparatus comprises a spray chamber 2 with a back wall 4 having in it an air/powder passage 6 leading to a powder recovery chamber 8 on top of which is mounted the filter device of this invention. The spray chamber is traversed by successive articles 10 hung from a conveyor 12 positioned above the spray chamber 2. Each article can be sprayed through an opening 14 in the front of the chamber, the articles entering and leaving the chamber through side openings 16. The base of the spray chamber has sloping sides forming a powder collection bin or hopper 18 fitted with an outlet duct at its lowest point. The duct has in it a valve 20 through which separated powder can be extracted from the chamber, when desired, for reuse.

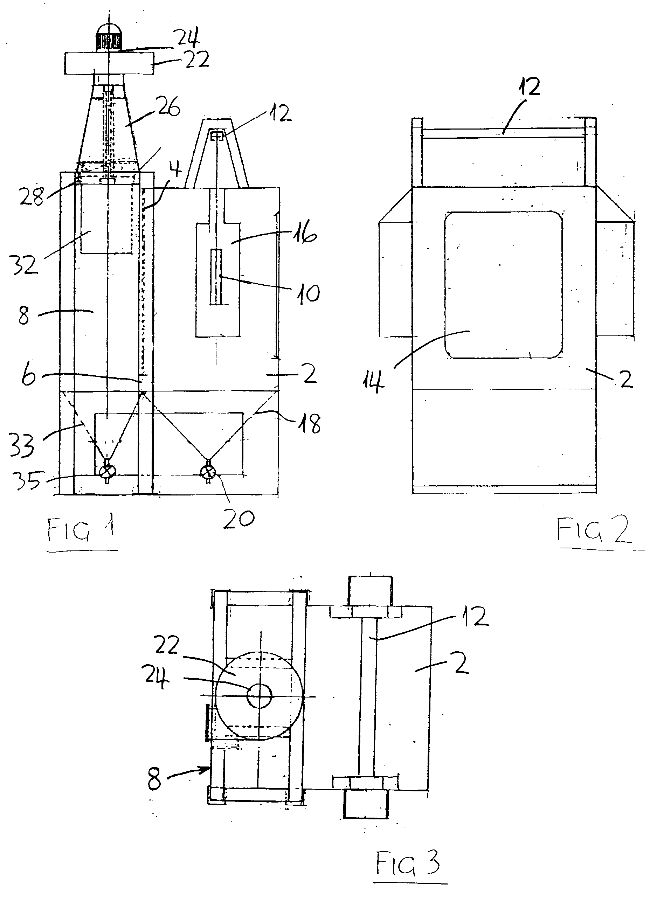

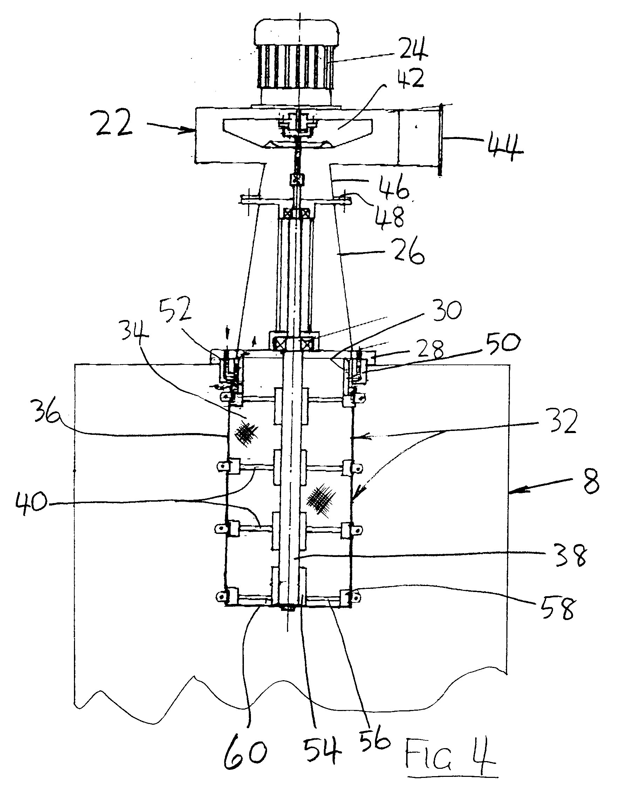

The powder recovery chamber 8 has at its upper end (as viewed) a suction pump 22 driven by an electric motor 24. Pump 22 is mounted on a frusto-conical adaptor 26 which has a mounting ring 28 at its lower end. As shown in more detail in Figure 4, the mounting ring is closely spaced radially from a rotary seal ring 30 having a series of filter bodies 32 secured to it. Each filter body is in the form of a hollow cylinder having its curved surface 34 formed of mesh. In use the surface 34 is covered with a layer 36 of a suitable cloth, porous paper, or other filtration medium. The manner in which the filter layer is secured to its support 34 does not form part of the subject-matter of this invention; and so will not be described further herein. It is within the purview of this invention to apply a mesh or other reinforcement to the outer surface of filter layer 36 to help it to resist the centrifugal forces applied to it when it is rotated at high speed. The filter body 32 is connected to an axial rotary shaft 38 by means of radially-extending spokes 40. This permits the air which has passed through the filter layer 36 to flow to the inlet of the suction pump 22 through the space between the shaft 38 and the interior of adaptor 26. At its upper end the shaft 38 is connected to the rotor 42 of the suction pump, and thereby to the rotor of the electric motor. In this way the suction pump impeller and the high-speed rotary filter are driven synchronously. However, in another embodiment of the present invention, the drive to the pump impeller and to the rotary filter can be separated from each other. In this latter form, the rotary filter is selectively connected to motor 24 in a manner depending on the pressure drop across the filter. Assuming that the pressure in the interior of the powder-recovery chamber 8 stays roughly constant at atmospheric pressure, then as the filter starts to become blocked by the filtered particulate material, the sub-atmospheric pressure in the interior of filter body 32 decreases until it reaches a value at which the filter body becomes connected to the motor 24. When this happens, the filter body accelerates to such a high speed that centrifugal forces tend to throw off the caked particulate material clogging the filter. The resultant unblocking of the pores in the filter allows the sub-atmospheric pressure in the interior of the filter body to rise to a value at which the filter body is again disconnected from motor. Whether rotating or stationary, the filter body 32 continues to act as a filter, so that the filtration process is continuous.

In like manner to spray-coating booth 2, the particle-recovery chamber has its lower end provided with sloping walls 33 forming a hopper. The collected powder or other fines may be extracted from the chamber through a valve 35 when the filter is not operating.

Because there is no need for the filter body to be scraped or otherwise subjected to any mechanical process for dislodging the captured particles, the life of the filtration medium is considerably extended compared with static filters using the same filtration medium.

Although the drawings show there being separate support and filtration layers, it could be that there are or will be permeable filtration materials able to be formed into curved panels of sufficient mechanical strength to withstand the forces imposed on them in use, so that no separate reinforcement is necessary.

Turning now to Figure 4, this shows in more detail the construction of the rotary filter of the present invention. Starting at the top, it can be seen that the suction pump takes the form of a centrifugal pump having a rotor 42 adapted to be spun at high speed by motor 24 in order to eject cleaned air into the atmosphere through an exhaust port 44. The housing of the stator of the suction pump has a frusto-conical section 46 terminating in a planar flange 48 pierced by holes by means of which the suction pump can be bolted to the flanged upper end of adaptor 26. The lower end of adaptor 26 terminates in the mounting ring 28 which is secured, as described above, to the roof of the particle-recovery chamber 8. Positioned within the mounting ring 28 is a fixed spacer ring 50 having its inner cylindrical surface spaced radially from the opposing face of the sealing ring 30 by a gap which can be as small as 0.5 mm. When the filter is operating, the effect of rotation of impeller 42 is to produce a sub-atmospheric pressure in the interior of adaptor 26 and the filter body 32, thus producing a radial pressure gradient across the gas-permeable wall or layers 34 and 36 of body 32. The spacer ring 50 has in it several angularly-spaced passages 52 of L-shaped axial cross-section as viewed. These passages are effective to place the above-mentioned radial gap into communication with the atmosphere. When the suction pump 22 is rotated, irrespective of whether or not the filter body is rotated with it, the resultant sub-atmospheric pressure in the interior of the filter draws fresh air from the atmosphere through the passages 52 and the radial gap into the interior of the adaptor, so as to become mixed with the air or other gas which has passed through the filter, leaving behind it all or most of the particles which were entrained in it. The gas bleed produced by the provision of passage 52 and the cylindrical gap may be made adjustable by incorporating a suitable fluid impedance in the passages 52, or by blanking off a chosen number of them.

From Figure 4 it will be seen that the filter body itself comprises three like sections or bodies 32 coupled together in series. Each body 32 may have an integral support collar 54 with radial support arms 56, or these may be provided by separate members each adapted to be secured to the adjacent ends of two cylindrical bodies of filtration material. These cylindrical bodies are secured to annular clamps 58 in a substantially gas-tight manner. The planar end face 60 of the structure may be made of permeable material, such as from a circle of mesh, or it can be made of an impermeable material. If the former, then there would inevitably result a central portion of this end face which is permanently blocked by caked powder, because the centrifugal force would be ineffective at small radii to throw this powder off the mesh, and so it would accumulate.

## Claims

1. A rotary device for filtering particulate material from air or other gas, comprising at least one length of a cylindrical body (32) of a gas-permeable filtration material, the body being attached to an axial support (38), means for rotating the cylindrical body about its axis at a speed sufficient to detach accumulated particulate material from the external periphery thereof, and wherein the interior of the cylindrical body (32) is connected at one end to the inlet of a motor-driven suction pump (22).

2. A device as claimed in claim 1, in which the body (32) of filtration material is supported by a body (34) of gas-permeable reinforcement material.

3. A device as claimed in claim 2, in which the support body is attached to a rotary seal ring (30) which is radially spaced from a spacer ring (50) adapted to be secured to the housing (8) of a particle-recovery chamber into which the particle-laden air to be cleaned is intended to flow, and in which the space between the two rings is in communication with the atmosphere through at least one passage (52) in the spacer ring.

4. A device as claimed in any preceding claim, in which the rotor is spaced axially from the nearer end of the filter support body by a hollow adaptor (26) having one end acting as an exhaust port for the gas which has flowed into the interior of the filter, and having its other end acting as an inlet port for the suction pump.

5. A device as claimed in claim 4, in which the adaptor (26) is substantially of frusto-conical shape, being secured at its exhaust port end to the housing (80) of a recovery chamber for the particle-laden air, and being secured at its other end to a support flange (48) for the stator housing of the suction pump.

6. A device as claimed in claim 5, in which the stator housing also acts as a support for an electric motor (24) connected to the rotor of the suction pump.

7. A device as claimed in any preceding claim, in which the filter body is of adjustable length and effective surface area by being composed of one or more like bodies (32) of filter support material which are detachably mounted together in a substantially gas-tight manner, and in which that end of the filter which is remote from the exhaust port of the filter is blanked off by either a blanking piece (60) or a circular portion (60) of filter-support material.

8. A device as claimed in any preceding claim, in which the suction pump (22) is of the centrifugal flow type, being adapted to vent the cleaned air laterally of the axis of its rotor.

9. A device as claimed in any preceding claim, fitted to the roof of an upright particle-recovery chamber in the lower portion of which is an inlet duct (60) for the particle-laden air, the base of the chamber being in the form of a funnel or hopper (33) in which are collected the particles which drop onto it by gravity, the funnel being fitted with an outlet valve (35) at its lowest point through which the collected particles may be removed when the interior of the chamber is at atmospheric pressure.

10. A device as claimed in claim 9, in which the duct is connected to the interior of a powder/spray-coating booth (2).

11. A device as claimed in any preceding claim wherein the drive for the motor driven suction pump (22) is arranged to rotate the cylindrical body (32) in a continuous or intermittent fashion.

12. A device as claimed in any preceding claim, in which the filter is adapted to be connected to or disconnected from the rotor of the suction pump, to rotate with it or not in dependence on the radial pressure drop between the outside and interior of the cylindrical body (32).
